# EUROPEAN PATENT APPLICATION

(11) **EP 4 592 300 A1**
(43) Date of publication of application: **30.07.2025**
(21) Application number: 23868091.2
(22) Date of filing: 12.09.2023
(51) Int. Cl.: C07F 7/21, C09J 183/04

(54) **CYCLIC ORGANOPOLYSILOXANE, SILICONE COMPOSITION, ADHESION PROMOTER, AND ADHESIVE**

(30) Priority: 20.09.2022 JP 2022149526
(71) Applicant: SHIN-ETSU CHEMICAL CO., LTD., Tokyo 1000005 (JP); Kagoshima University, Kagoshima-shi, Kagoshima 890-8580 (JP)
(72) Inventor: AKETA,Takashi, Annaka-shi, Gunma 379-0224 (JP); OZAI, Toshiyuki, Annaka-shi, Gunma 379-0224 (JP); NAKAGAWA, Hideo, Tokyo 100-0005 (JP); KANEKO, Yoshiro, Kagoshima-shi, Kagoshima 890-8580 (JP)
(74) Representative: Schicker, Silvia
(86) International application number: PCT/JP2023/033116
(87) International publication number: WO 2024/062968

(57) **Abstract**

The present invention is a cyclic organopolysiloxane represented by the following general formula (1). In the formula (1), R¹ independently represents an alkyl group having 1 to 4 carbon atoms; R² independently represents an alkylene group having 1 to 8 carbon atoms; "m" represents an integer of 1 to 3, "n" represents an integer of 1 to 3, and the sum of "m" and "n" is 4 to 6; and the sequence order of siloxane units is arbitrary. This can provide a cyclic organopolysiloxane used as an adhesion aid that is excellent in adhesiveness to metals and resins, particularly to polycarbonate resins, and can stably impart adhesiveness even when exposed to a high-temperature and high-humidity environment for a long period of time; and a silicone composition containing the cyclic organopolysiloxane; an adhesion aid; and an adhesive.

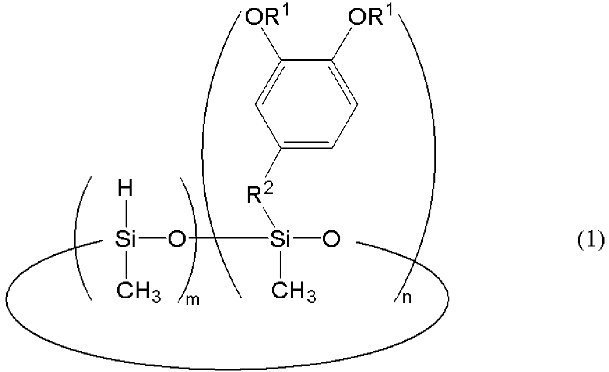

## Description

### TECHNICAL FIELD

The present invention relates to a cyclic organopolysiloxane, a silicone composition containing the cyclic organopolysiloxane, an adhesion aid, and an adhesive.

### BACKGROUND ART

Many cyclic organopolysiloxane compounds having a functional group have been developed as an adhesion aid that imparts adhesiveness to various base materials to a silicone composition (Patent Documents 1 and 2). As the combinations of adherends become more diverse, it is desired that a single adhesion aid exhibits adhesiveness to multiple adherends such as metals and resins, and in particular, there is a demand for an adhesion aid that has adhesiveness to resins such as a polycarbonate.

Furthermore, performance required in light of durability becomes higher, and an adhesion aid is required to maintain adhesiveness even when exposed to a high-temperature and high-humidity environment such as 85°C and 85%RH for a long period of time.

### CITATION LIST

### PATENT LITERATURE

Patent Document 1: JP2013-032498A
Patent Document 2: JP4013023B2

### SUMMARY OF INVENTION

### TECHNICAL PROBLEM

The present invention was made in view of the above circumstances, and has for its object to provide a cyclic organopolysiloxane used as an adhesion aid that is excellent in adhesiveness to metals and resins, particularly to polycarbonate resins, and can stably impart adhesiveness even when exposed to a high-temperature and high-humidity environment for a long period of time; a silicone composition containing the cyclic organopolysiloxane; an adhesion aid; and an adhesive.

### SOLUTION TO PROBLEM

To solve the above problems, the present invention provides a cyclic organopolysiloxane represented by the following general formula (1).

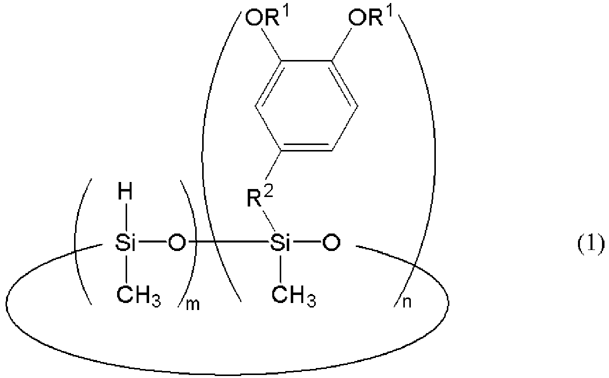

In the formula, R¹ independently represents an alkyl group having 1 to 4 carbon atoms; R² independently represents an alkylene group having 1 to 8 carbon atoms; "m" represents an integer of 1 to 3, "n" represents an integer of 1 to 3, and the sum of "m" and "n" is 4 to 6; and the sequence order of siloxane units is arbitrary.

Such a cyclic organopolysiloxane is excellent in adhesiveness to metals and resins, particularly to polycarbonate resins, and in durability against a high-temperature and high-humidity environment.

Further, the present invention provides an adhesion aid consisting of the above cyclic organopolysiloxane.

Such an adhesion aid is excellent in adhesiveness to metals and resins, particularly to polycarbonate resins, and in durability against a high-temperature and high-humidity environment.

Further, the present invention provides a silicone composition containing the above cyclic organopolysiloxane.

Such a silicone composition is excellent in adhesiveness to metals and resins, particularly to polycarbonate resins, and has stable adhesiveness even when exposed to a high-temperature and high-humidity environment for a long period of time.

Further, the present invention provides an adhesive consisting of the silicone composition.

Such an adhesive is excellent in adhesiveness to metals and resins, particularly to polycarbonate resins, and has stable durability even when exposed to a high-temperature and high-humidity environment for a long period of time.

### ADVANTAGEOUS EFFECTS OF INVENTION

The inventive cyclic organopolysiloxane is excellent in adhesiveness to metals and resins, particularly to polycarbonate resins, and has adhesiveness even when exposed to a high-temperature and high-humidity environment for a long period of time. Therefore, the inventive cyclic organopolysiloxane is useful as an adhesion aid to impart adhesiveness to a silicone composition, etc. In particular, it is possible to use suitably for automobile uses, electric/electronic uses, etc., which require reliability against a high-temperature and high-humidity environment.

### BRIEF DESCRIPTION OF DRAWINGS

FIG. 1 is a ¹H NMR spectrum of cyclic organopolysiloxane 1 of Synthesis Example 1; and
FIG. 2 is a ¹H NMR spectrum of cyclic organopolysiloxane 2 of Synthesis Example 2.

### DESCRIPTION OF EMBODIMENTS

As described above, it has been desired to develop a cyclic organopolysiloxane used as an adhesion aid that is excellent in adhesiveness to metals and resins and can stably impart adhesiveness to a composition even when exposed to a high-temperature and high-humidity environment for a long period of time.

As a result of their diligent study to achieve the above objects, the inventors found that a specific cyclic organopolysiloxane was excellent in adhesiveness to metals and resins, particularly to polycarbonate resins, and had high durability against a high-temperature and high-humidity environment, and have completed the present invention.

That is, the present invention is a cyclic organopolysiloxane represented by the following general formula (1).

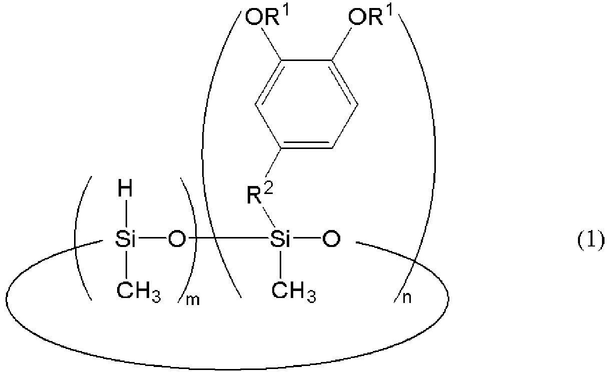

In the formula, R¹ independently represents an alkyl group having 1 to 4 carbon atoms; R² independently represents an alkylene group having 1 to 8 carbon atoms; "m" represents an integer of 1 to 3, "n" represents an integer of 1 to 3, and the sum of "m" and "n" is 4 to 6; and the sequence order of siloxane units is arbitrary.

Hereinafter, the present invention will be described in detail, but the present invention is not limited thereto.

### [Cyclic Organopolysiloxane]

The present invention is a cyclic organopolysiloxane represented by the following general formula (1).

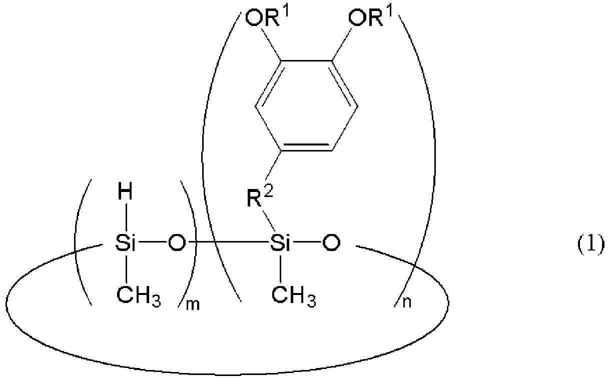

In the formula, R¹ independently represents an alkyl group having 1 to 4 carbon atoms; R² independently represents an alkylene group having 1 to 8 carbon atoms; "m" represents an integer of 1 to 3, "n" represents an integer of 1 to 3, and the sum of "m" and "n" is 4 to 6; and the sequence order of siloxane units is arbitrary.

R¹ independently represents an alkyl group having 1 to 4 carbon atoms. The alkyl group may be linear, branched, or cyclic. Specific examples thereof include a methyl group, an ethyl group, an n-propyl group, an isopropyl group, an n-butyl group, an isobutyl group, a sec-butyl group, and a tert-butyl group. A methyl group and an ethyl group are preferable.

R² independently represents an alkylene group having 1 to 8 carbon atoms. The alkylene group may be linear, branched, or cyclic. Specific examples thereof include a methylene group, an ethylene group, a trimethylene group, a propylene group, a tetramethylene group, an isobutylene group, a dimethylethylene group, a pentamethylene group, a 2,2-dimethyltrimethylene group, a hexamethylene group, a heptamethylene group, and an octamethylene group. A methylene group, an ethylene group, and a trimethylene group are preferable, and a trimethylene group is particularly preferable.

The sum of "m" and "n" is 4 to 6, preferably 4 or 5, and particularly preferably 4.

"m" represents an integer of 1 to 3, preferably 2 or 3, and particularly preferably 3.

"n" represents an integer of 1 to 3, preferably 1 or 2, and particularly preferably 1.

Specific examples of such cyclic organopolysiloxanes include those represented by the following structural formulae, but are not limited to these structures.

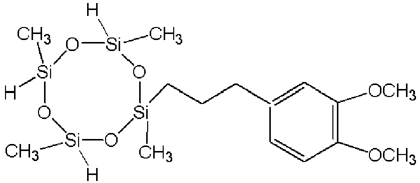

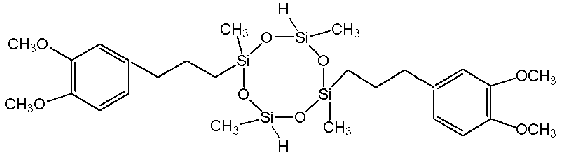

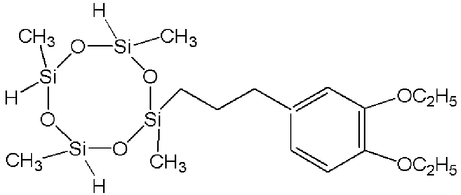

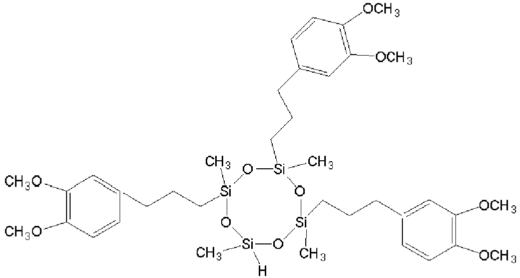

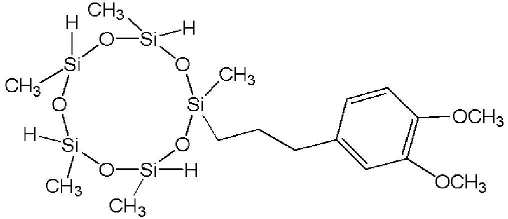

### [Adhesion Aid]

The inventive adhesion aid consists of the above cyclic organopolysiloxane. Such an adhesion aid is excellent in adhesiveness to metals and resins, particularly to polycarbonate resins, and in durability against a high-temperature and high-humidity environment.

### [Silicone Composition]

The inventive silicone composition contains the above-mentioned cyclic organopolysiloxane. Such a silicone composition is excellent in adhesiveness to metals and resins, particularly to polycarbonate resins, and has stable adhesiveness even when exposed to a high-temperature and high-humidity environment for a long period of time.

There are no particular limitations on components contained in the inventive silicone composition, and examples thereof include silicone compositions containing: an organopolysiloxane (A) having two or more aliphatic unsaturated hydrocarbon groups bonded to a silicon atom per molecule, an organohydrogenpolysiloxane (B) having two or more hydrogen atoms bonded to a silicon atom per molecule, a platinum group metal catalyst (C), a reaction control agent (D), the inventive cyclic organopolysiloxane (E), and an inorganic filler (F).

### [Adhesive]

The inventive adhesive consists of the above silicone composition. Such an adhesive is excellent in adhesiveness to metals and resins, particularly to polycarbonate resins, and has stable adhesiveness even when exposed to a high-temperature and high-humidity environment for a long period of time.

### [Method for Manufacturing Cyclic Organopolysiloxane]

The method for manufacturing the inventive cyclic organopolysiloxane is not particularly limited, but, for example, the cyclic inventive organopolysiloxane can be manufactured by reacting a cyclic methylhydrogenpolysiloxane represented by the following general formula (2) with an alkenyl group-containing dialkoxybenzene represented by the following general formula (3) in the presence of a platinum group metal catalyst.

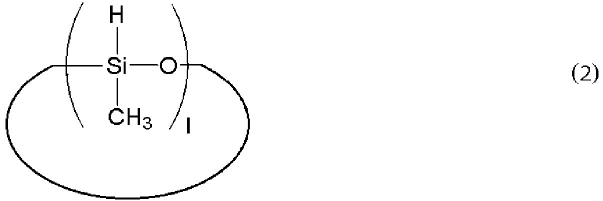

In the formula, "l" represents an integer of 4 to 6.

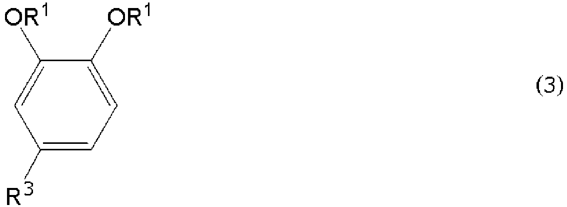

In the formula, R³ represents an alkenyl group having 2 to 8 carbon atoms, and R¹ is the same as the above.

"l" represents an integer of 4 to 6, preferably 4 or 5, and particularly preferably 4.

R³ is an alkenyl group having 2 to 8 carbon atoms. The alkenyl group may be linear, branched, or cyclic. Specific examples thereof include a vinyl group, an allyl group, a propenyl group, a butenyl group, and a hexenyl groups. An allyl group is preferable. R¹ is the same as the above.

One kind of the alkenyl group-containing dialkoxybenzene represented by the general formula (3) may be used or two or more kinds thereof may be used in combination.

### EXAMPLE

Hereinafter, the present invention will be specifically described with reference to Examples and Comparative Examples. However, the present invention is not limited thereto.

### [Synthesis Example 1] Synthesis of cyclic organopolysiloxane 1

2,4,6,8-Tetramethylcyclotetrasiloxane (MW = 240.51 g/mol; 10.0 mmol = 2.4051 g) and 4-allyl-1,2-dimethoxybenzene [(MW = 178.23 g/mol, purity: 98%); 10.0 mmol = 1.8187 g] were each dissolved in 15 mL of dichloromethane and mixed. A platinum catalyst [(platinum-divinyltetramethyldisiloxane complex/toluene solution, 0.5 wt%); 3 wt% = 0.1306 g] was dissolved in dichloromethane so that the catalyst amount was 3 parts by mass when the total mass of the 2,4,6,8-tetramethylcyclotetrasiloxane and the 4-allyl-1,2-dimethoxybenzene was 97 parts by mass, and the mixed solution was added with the catalyst solution and stirred at room temperature for 4 hours. Thereafter, the mixed solution was added with 1 part by mass of activated carbon (0.6420 g) relative to 100 parts by mass of the mixed solution and stirred for another one hour. The activated carbon was removed by suction filtration, and the dichloromethane was removed by an evaporator at 30°C to obtain cyclic organopolysiloxane 1 [yielding amount: 3.8148 g, yielding ratio: 81%, calculated using FW = 468.63 g/mol]. [{[CH₃SiO(CH₂)₃C₆H₃(OCH₃)₂, FW = 238.35 g/mol] × 0.32 + [CH₃SiO(H), FW = 60.13 g/mol] × 0.68} × 4 = 468.63 g/mol]

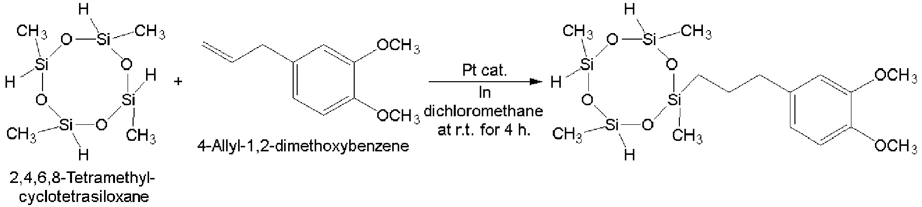

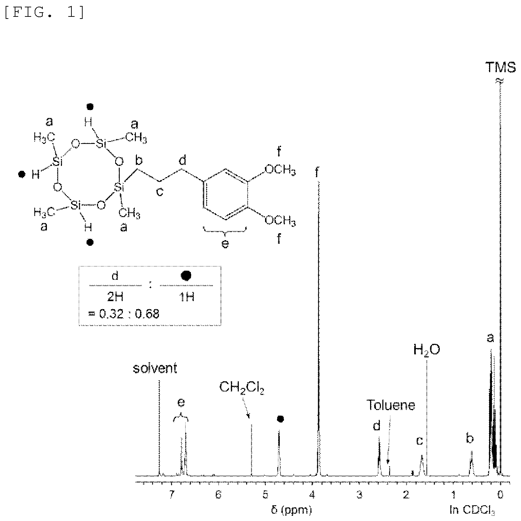

FIG. 1 shows ¹H NMR spectrum of the obtained cyclic organopolysiloxane 1. A signal (b) of methylene adjacent to a silicon atom was observed by the ¹H NMR, confirming the introduction of the 4-allyl-1,2-dimethoxybenzene. In addition, the composition ratio was calculated from a signal (d) of methylene adjacent to an aromatic ring and a signal **(•)** derived from Si-H, confirming that an average of 1 unit [4 × 0.32 ≒ 1 unit (1.28)] of the 4-allyl-1,2-dimethoxybenzene was introduced in 4 units.

### [Synthesis Example 2] Synthesis of cyclic organopolysiloxane 2

2,4,6,8-Tetramethylcyclotetrasiloxane (MW = 240.51 g/mol; 5.0 mmol = 1.2026 g) and 4-allyl-1,2-dimethoxybenzene [(MW = 178.23 g/mol, purity: 98%); 10.0 mmol = 1.8187 g] were each dissolved in 15 mL of dichloromethane and mixed. A platinum catalyst [(platinum-divinyltetramethyldisiloxane complex/toluene solution, 0.5 wt%); 3 wt% = 0.0934 g] was dissolved in dichloromethane so that the catalyst amount was 3 parts by mass when the total mass of the 2,4,6,8-tetramethylcyclotetrasiloxane and the 4-allyl-1,2-dimethoxybenzene was 97 parts by mass, and the mixed solution was added with the catalyst solution and stirred at room temperature for 4 hours. Thereafter, the mixed solution was added with 1 part by mass of activated carbon (0.6296 g) relative to 100 parts by mass of the mixed solution and stirred for another hour. The activated carbon was removed by suction filtration, and the dichloromethane was removed by an evaporator at 30°C to obtain cyclic organopolysiloxane 2 [yielding amount: 2.9982 g, yielding ratio: 98%, calculated using FW = 611.21 g/mol] . [{[CH₃SiO(CH₂)₃C₆H₃(OCH₃)₂, FW = 238.35 g/mol] × 0.52 + [CH₃SiO(H), FW = 60.13 g/mol] × 0.48} × 4 = 611.21 g/mol]

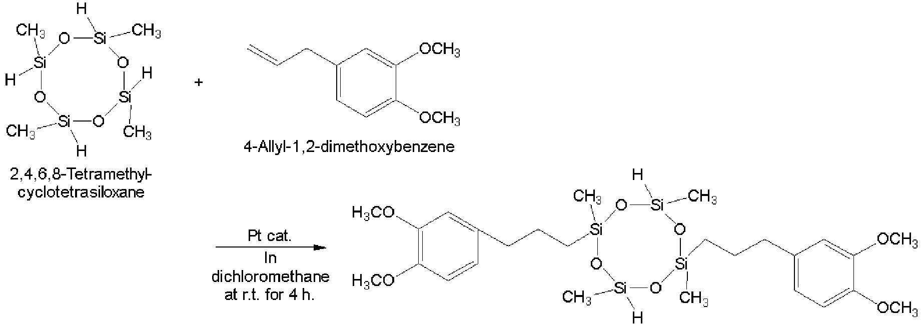

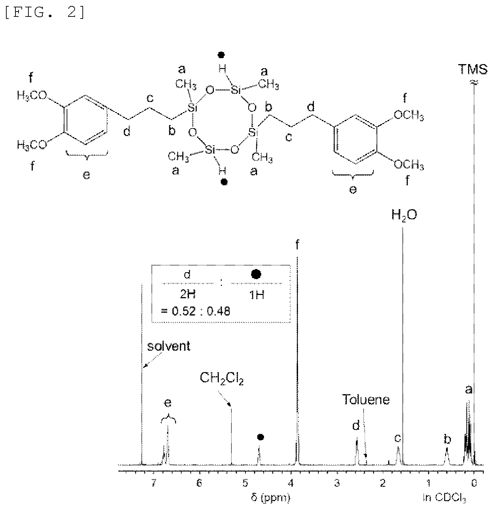

FIG. 2 shows ¹H NMR spectrum of the obtained cyclic organopolysiloxane 2. A signal (b) of methylene adjacent to a silicon atom was observed by the ¹H NMR, confirming the introduction of the 4-allyl-1,2-dimethoxybenzene. In addition, the composition ratio was calculated from a signal (d) of methylene adjacent to an aromatic ring and a signal (**•**) derived from Si-H, confirming that an average of 2 unit [4 × 0.52 ≒ 2 unit (2.08)] of the 4-allyl-1,2-dimethoxybenzene was introduced in 4 units.

### [Example 1 and Comparative Example 1] Preparation of silicone composition

The following components (A) to (F) were mixed according to the blending ratios (part by mass) shown in Table 1 to prepare silicone compositions.

The component (A) was added with the component (F) and mixed using a three-roll mill, and subsequently added with the components (C) and (D) in this order and mixed. Finally, the mixture was added with the components (B) and (E), mixed, and defoamed under reduced pressure to obtain a silicone composition.

The obtained silicone compositions were each applied on a base material (an aluminum plate, a PBT (polybutylene terephthalate) resin plate, and a PC (polycarbonate) resin plate), cured by heating at 150°C in an oven for 60 minutes, to prepare test pieces that have a cured product layer made of the silicone composition on the base material.

Each test piece was further exposed to an environment of 85°C and 85%RH for 300 hours, and its adhesiveness was evaluated before and after the exposure according to the following method. The results were shown in Table 1.

### [Evaluation of Adhesiveness]

After putting a cut at an adhesion interface of an end part of each test piece with a razor blade, the cured silicone product was pulled with hands to see if it would be delaminated or not. When the cured silicone product was kept bonded, the test piece was evaluated as "bonded". When the cured silicone product was delaminated at the interface from the base material, the test piece was evaluated as "delaminated".

(A): Dimethylpolysiloxane with both ends blocked with dimethylvinylsilyl groups (Viscosity at 25°C measured by a rotational viscometer is 100,000 mPa·s)
(B): Methylhydrogenpolysiloxane represented by the following formula: 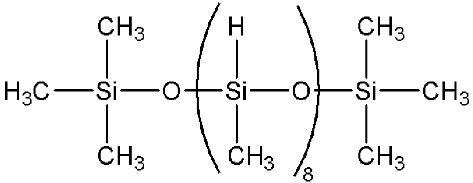
(C): Toluene solution of platinum-divinyltetramethyldisiloxane complex (platinum concentration: 0.5 mass%)
(D): Ethynylcyclohexanol (reaction control agent)
(E-1): Cyclic organopolysiloxane 1 obtained in Synthesis Example 1
(E-2): Cyclic organopolysiloxane (comparative component) represented by the following structural formula: 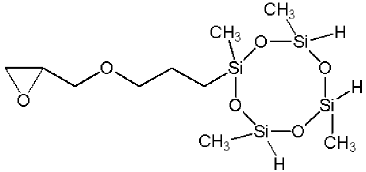
(F): Fumed silica having a BET specific surface area of 300 m²/g, which is surface-treated with hexamethyldisilazane

**[Table 1]**

| | | | Example 1 | Comparative Example 1 |
|---|---|---|---|---|
| Composition (parts by mass) | (A) | | 100 | 100 |
| | (B) | | 0.65 | 0.65 |
| | (C) | | 0.15 | 0.15 |
| | (D) | | 0.29 | 0.29 |
| | (E-1) | | 1.26 | - |
| | (E-2) | | - | 1.3 |
| | (F) | | 10 | 10 |
| Evaluation of adhesiveness | Aluminum | Initial state | Bonded | Bonded |
| | | After 85°C 85%RH 300 hrs | Bonded | Delaminated |
| | PBT | Initial state | Bonded | Bonded |
| | | After 85°C 85%RH 300 hrs | Bonded | Bonded |
| | PC | Initial state | Bonded | Delaminated |
| | | After 85°C 85%RH 300 hrs | Bonded | - |

As shown in Table 1, the silicone composition (Example 1) containing the inventive cyclic organopolysiloxane exhibited good adhesiveness to all of the aluminum plate, the polybutylene terephthalate resin plate, and the polycarbonate resin plate, and maintained its adhesiveness even after being exposed to an environment of 85°C and 85%RH for 300 hours.

On the other hand, in Comparative Example 1 using a cyclic organopolysiloxane of a type of a glycidyl ether conventionally known as an adhesion aid, instead of the inventive cyclic organopolysiloxane, no adhesion to polycarbonate was exhibited, and adhesiveness to aluminum could not be maintained after exposure to a high-temperature and high-humidity environment.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A cyclic organopolysiloxane represented by the following general formula (1), 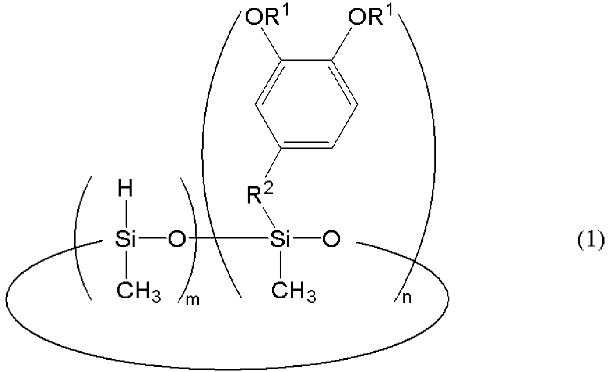 wherein R¹ independently represents an alkyl group having 1 to 4 carbon atoms; R² independently represents an alkylene group having 1 to 8 carbon atoms; "m" represents an integer of 1 to 3, "n" represents an integer of 1 to 3, and the sum of "m" and "n" is 4 to 6; and the sequence order of siloxane units is arbitrary.

2. An adhesion aid consisting of the cyclic organopolysiloxane according to claim 1.

3. A silicone composition comprising the cyclic organopolysiloxane according to claim 1.

4. An adhesive consisting of the silicone composition according to claim 3.
